# EUROPÄISCHE PATENTSCHRIFT

(11) **EP 0 855 524 B1**
(45) Veröffentlichungstag und Bekanntmachung des Hinweises auf die Patenterteilung: **23.04.2003**
(21) Anmeldenummer: 98100785.9
(22) Anmeldetag: 17.01.1998
(51) Int. Cl.: F16B 33/00, F16B 37/14

(54) **Befestiger zur Fixierung von Platten an einer Unterkonstruktion**
Fastener for fastening panels to a supporting construction
Dispositif de fixation pour fixer des panneaux sur une construction porteuse

(30) Priorität: 27.01.1997 DE 19702838
(43) Veröffentlichungstag der Anmeldung: 29.07.1998
(73) Patentinhaber: SFS intec Holding AG, 9435 Heerbrugg (CH)
(72) Erfinder: Göldi, Michael, 9464 Rüthi (SG) (CH); Gasser, Daniel, 9444 Diepoldsau (CH)
(74) Vertreter: Ludescher, Hans

(56) Entgegenhaltungen:
- FR-A- 1 492 368
- FR-A- 2 412 012
- GB-A- 184 388
- US-A- 2 348 589
- US-A- 4 033 243
- US-A- 5 244 327

## Beschreibung

Die Erfindung betrifft einen Befestiger zur Fixierung von Platten an einer Unterkonstruktion.

Befestigungen von Balkonplatten an einer Unterkonstruktion erfolgen bisher meist durch Schrauben und Muttern, wobei die Schrauben in Durchgangsbohrungen eingesetzt werden. Weiter ist der Einsatz von Gewindehülsen oder dergleichen in Platten bekannt. Bei der erstgenannten konstruktiven Variante erweist sich die Montage als relativ schwierig, weil von der Außenseite der Platten ebenfalls Werkzeuge angesetzt werden müssen, um die anzuordnende Mutter beim Verschraubvorgang festzuhalten. Eine Befestigung mit Gewindehülsen oder einfach mit Sacklochbefestigem hat sich ebenfalls als sehr schwierig erwiesen, weil die Platten, welche an einer Unterkonstruktion befestigt werden sollen, relativ dünn sind und deshalb kaum ausreichende Ausreißwerte erzielt werden können.

Ein Befestiger ist aus der US-A-2 348 589 bekannt. Dieser bekannte Befestiger hat zwar an der Unterseite des Anschlagbundes des mutterartigen Teils Spitzen als Verdreh- und Verliersicherung, diese Sicherung soll besonden zu einem Zeitpunkt wirksam sein, bevor die Schraube mit ihrem Gewinde in den rohrförmigen Abschnitt des mutterartigen Teils eingreift. Die eigentliche Verdreh- und Verliersicherung wird bei diesem bekannten Befestiger durch das Aufweiten des rohrförmigen Abschnittes des mutterartigen Teils erzeugt. Auch bei diesem bekannten Befestiger erweist sich die Montage als relativ schwierig, weil während des Setzens des Befestigers ein Schraubendreher in einen Schlitz des mutterartigen Teils eingeführt sein muß, damit das mutterartige Teil gegen Verdrehung festgehalten werden kann, während die Schraube eingedreht wird. Überdies ließe sich eine dauerhafte Befestigung von Balkonplatten mit dem bekannten Befestiger kaum herstellen, weil sich das mutterartige Teil sowohl durch die zu befestigenden Platten als auch durch die Unterkonstruktion erstreckt.

Aus der FR 1492368 ist ein dübelartiges Mutterteil bekannt, das in eine zu befestigende Platte aus relativ weichem Kunststoffmaterial eingeschlagen wird, wobei dieses Mutterteil aus Kunststoff besteht, das in der Variante nach Fig. 7 hein Gewinde aufweist sondern mit einer herkömmlichen gewinde schneidenden Schraube verwendet wird.

Aus der US 40 33 243 ist ein Befestiger mit einem mutterartigen Teil mit einem Fertigen Innengewinde und mit einer Schraube mit einem herkömmlichen Außengewinde bekannt.

Die vorliegende Erfindung hat sich zur Aufgabe gestellt, einen Befestiger der eingangs genannten Art zu schaffen, mit welchem eine sichere und einfache Montage von Balkonplatten durchgeführt werden kann.

Die Aufgabe ist erfindungsgemäß durch einen Befestiger mit den im Patentanspruch 1 angegebenen Merkmalen gelöst.

Da bei dem Befestiger gemäß der Erfindung eine Schraube eingesetzt wird, welche in den rohrförmigen Abschnitt des mutterartigen Teiles ein entsprechendes Gewinde einformt oder einschneidet, soll auch der Einform- oder Einschneidvorgang optimiert werden. Deshalb ist gemäß der Erfindung die Schraube mit einem Gewindeabschnitt nach Art eines Gleichdicks z.B. mit einem trilobularen Querschnitt ausgebildet. Eine solche Ausbildung des Gewindeabschnittes der Schraube - und zwar zumindest in dem das Gewinde formenden oder schneidenden Abschnittsbereich - bringt wesentliche Vorteile mit sich. Zum einen ist das Drehmoment zum Einformen des Gewindes nicht extrem hoch, wodurch auch die Mittel zur Herstellung der Verdrehsicherung des mutterartigen Teiles entsprechend angepaßt werden können, zum andem ist das Einformverhalten des Gewindeabschnittes und somit auch die Rückdrehsicherung optimal.

Gewindeformende Befestiger, bei denen der Gewindeabschnitt nach Art eines Gleichdicks z.B. mit einem trilobularen Querschnitt ausgebildet ist, sind an sich bekannt, z.B. aus der DE-A- 27 06 246, jedoch nicht in Verbindung mit einem mutterartigen Teil.

Bei Einsatz des erfindungsgemäßen Befestigers können einerseits die Bohrungen in der Balkonplatte und gegebenenfalls auch in der Unterkonstruktion vor der gegenseitigen Anlage der beiden Teile vorbereitet werden, andererseits können in die in den Balkonplatten vorbereiteten Bohrungen bereits die mutterartigen Teile verliersicher gehalten eingesetzt werden. Anschließend muß nach dem gegenseitigen Ausrichten zwischen Balkonplatten und Unterkonstruktion nur noch eine entsprechende Schraube in das mutterartige Teil eingedreht werden, wobei durch die verdrehsichere Halterung des mutterartigen Teiles in der Balkonplatte kein besonderes Werkzeug an der Außenseite dieser Montagestelle anzusetzen ist. Das mutterartige Teil bleibt also in dieser Stellung in der Balkonplatte, bis das Gewinde in der notwendigen Tiefe geformt oder geschnitten ist.

Dadurch, daß die Schraube das Gewinde in dem mutterartigen Teil selbst einformt oder einschneidet, ist natürlich auch die beste Voraussetzung für eine optimale Losdrehsicherheit gegeben. Der Gewindeabschnitt der Schraube sitzt passend und sehr eng im Gewinde des rohrförmigen Abschnittes, so daß auch ein ungewolltes Lockern der Verbindung verhindert wird. Damit ist ebenfalls eine entsprechende Sicherheit gegeben, insbesondere dann, wenn ein Spezialangriff im Schraubenkopf vorgesehen wird, der nicht von jedermann betätigt werden kann.

Bei dem erfindungsgemäßen Befestiger ist es zusätzlich möglich, daß die Verdrehsicherung des mutterartigen Teiles bei Überschreiten eines entsprechend hohen Drehmomentes aufgehoben wird. In diesem Fall würde die Schraube beim Eindrehen in das mutterartige Teil nach dem praktisch endgültigen Setzen weitergedreht, was auch die Mitdrehung des mutterartigen Teiles hervorrufen würde. In einem solchen Falle wäre eine optimale Sicherung der Befestigung gewährleistet, da dann auch ein Lösen ohne besondere Halterungsmöglichkeit für das mutterartige Teil nicht mehr durchführbar wäre.

Da die Bohrung in der zu fixierenden Balkonplatte und in der Unterkonstruktion durch den Einsatz des rohrförmigen Abschnittes des mutterartigen Teiles relativ groß ist, ist auch ein entsprechendes Spiel zwischen dem Schraubenschaft und der Bohrung in der Unterkonstruktion gegeben, um ein unterschiedliches Verhalten der Balkonplatten und der Unterkonstruktion bei einer Wärmedehnung auszugleichen.

Da bei dem erfindungsgemäßen Befestiger das mutterartige Teil eine gewindelose, mittige Bohrung aufweist, ist die Fertigung eines solchen mutterartigen Teiles sehr einfach, weil kein Innengewinde vorgesehen werden muß. Gerade dadurch ist eine optimale Anpassung zwischen dem Außendurchmesser des rohrförmigen Abschnittes und der mittigen Bohrung möglich. Somit ist je nach Einsatzfall eine exakte Ausnützung der Festigkeit und insbesondere auch bezüglich der Materialwahl solcher mutterartiger Teile möglich. Aufgrund der sehr einfachen Formgebung des mutterartigen Teiles kann dieses beispielsweise auch aus Aluminium oder einem anderen rostfreien Material gefertigt werden, was insbesondere deshalb vorteilhaft ist, weil Balkonplatten der Witterung ausgesetzt sind.

Vorteilhafte Ausgestaltungen der Erfindung bilden die Gegenstände der Unteransprüche.

Eine vorteilhafte Ausgestaltung sieht vor, daß die am Außenumfang des rohrförmigen Abschnittes des mutterartigen Teiles vorgesehenen Rippen im wesentlichen achsparallel ausgerichtet sind. Durch entsprechende konstruktive Maßnahmen ist eine Verdrehsicherung des mutterartigen Teiles zu bewirken, damit dieses beim Verschraubvorgang nicht gehalten werden muß. Die Rippen müssen einerseits zumindest das notwendige Drehmoment bei der Herstellung des Gewindes aufnehmen können, andererseits aber sollen durch die vorgesehenen Rippen beim Einschlagen des mutterartigen Teiles in die Bohrung in der Balkonplatte die Bohrungswandung und die Balkonplatte selbst nicht beschädigt werden.

Zur Gewährleistung eines optimalen Eindringens der Rippen in die Wandung der Bohrung wird vorgeschlagen, daß die Rippen an ihren Außenbereichen schneidenartig ausgebildet sind. Dies ist insbesondere deshalb von Vorteil, weil die zu fixierenden Balkonplatten eine entsprechende Festigkeit aufweisen, welche ein Eindringen von entsprechenden Elementen erschwert.

Um gerade das Einschlagen der mutterartigen Teile in die Bohrungen der Balkonplatte zu erleichtem, wird vorgeschlagen, daß die Rippen an ihrem mit dem rohrförmigen Abschnitt abschließenden Ende spitzwinklig oder bogenförmig verjüngt zum Außendurchmesser des rohrförmigen Abschnittes hin auslaufen. Dadurch wird auch ein leichteres Ansetzen des mutterartigen Teiles vor dem Einschlagvorgang ermöglicht.

In diesem Zusammenhang wäre es auch denkbar, daß der rohrförmige Abschnitt an seinem freien Ende mit einer Anfasung versehen oder in anderer Weise verjüngt ausgeführt ist. Dies bringt die Möglichkeit mit sich, das mutterartige Teil, d.h. den rohrförmigen Abschnitt desselben leichter in die vorbereitete Bohrung in der Balkonplatte einführen zu können. Sobald ein zentriertes Einführen erfolgt ist, kann das Einschlagen des mutterartigen Teiles natürlich leichter erfolgen und eine Beschädigung der Bohrungswandung und der Balkonplatte selbst verhindert werden.

Einerseits soll das mutterartige Teil nach außen hin einen ästhetischen Abschluß bilden, weil Balkonplatten einen Teil der Außenfassade eines Gebäudes darstellen, andererseits soll gewährleistet sein, daß keine Angriffsfläche für irgendwelche Werkzeuge vorhanden ist, um die Fixierung entsprechend sichern zu können. Daher ist es vorteilhaft, wenn der Anschlagbund des mutterartigen Teiles an seiner Außenoberfläche bogenförmig gewölbt ausgeführt ist.

Weiter wird vorgeschlagen, daß die Schraube einen Schraubenkopf aufweist, dessen Durchmesser wesentlich größer als der Durchmesser des Schaftes der Schraube und größer als der Außendurchmesser des rohrförmigen Abschnittes des mutterartigen Teiles ist. Es kann dadurch eine entsprechende Durchgangsbohrung in der Balkonplatte und in der Unterkonstruktion vorgesehen werden, wobei trotzdem immer die gewünschte Auflage des Schraubenkopfes vorhanden ist und bei unterschiedlicher Ausdehnung infolge Wärmeeinwirkung eine ausreichende Verschiebebewegung zwischen der Balkonplatte und der Unterkonstruktion erfolgen kann.

Zur Schonung der Oberfläche der Unterkonstruktion ist es zweckmäßig, wenn unter dem Schraubenkopf eine metallische Unterlegscheibe eingesetzt ist, deren Außendurchmesser größer als der Durchmesser des Schraubenkopfes ist und deren Lochdurchmesser gleich dem oder größer als der Durchmesser des Schraubenschaftes ist. Die Unterlegscheibe bewirkt dadurch eine sichere Auflage auf der Unterkonstruktion, wobei sich der Schraubenkopf beim Eindrehen der Schraube auf dieser Unterlegscheibe verdrehen kann, ohne in die Oberfläche der Unterkonstruktion einzudringen oder eine eventuelle Farbbeschichtung auf der Unterkonstruktion zu beschädigen.

Eine vorteilhafte Ausgestaltung der Erfindung ist dann gegeben, wenn die metallische Unterlegscheibe an ihrer dem Schraubenkopf abgewandten Unterseite eine elastische Dichtscheibe aufweist. Damit ist die Gewähr eines ständig elastisch nachgiebigen Anpreßdruckes der Befestigung gegeben. Außerdem wird bewirkt, daß keine Feuchtigkeit in den Innenraum der Bohrung in der Balkonplatte und in der Unterkonstruktion eindringen kann. Je nach dem Material der Balkonplatten ist dies von besonderer Bedeutung, da die zu fixierenden Balkonplatten normalerweise nur an der Oberfläche beschichtet sind.

Weiter wird vorgeschlagen, daß der Schraubenkopf mit einem mittigen Innenangriff zum Ansetzen eines Werkzeuges ausgestattet ist. Werkzeuge mit Innenangriff sind in der Regel im privaten Bereich nicht unbedingt vorhanden, so daß die Gefahr eines Lösens solcher Befestigungen von Balkonplatten wesentlich verringert wird. Natürlich ist es in diesem Zusammenhang denkbar, einen speziellen Innenangriff vorzusehen, welcher auch nicht mit einem zufällig passenden Schraubendreher erfaßt werden kann. Auf diese Weise können noch zusätzliche Sicherheitsvarianten eingebaut werden.

Besonders einfach ist die Montage bei dem Einsatz des erfindungsgemäßen Befestigers, wenn dieser in eine die Balkonplatte und die Unterkonstruktion durchdringende Durchgangsbohrung, deren Durchmesser im wesentlichen dem Außendurchmesser des rohrförmigen Abschnittes des mutterartigen Teiles entspricht, einsetzbar ist. Es kann also mit einer Bohrung mit durchgehend gleichem Durchmesser sowohl in der Balkonplatte als auch in der Unterkonstruktion gearbeitet werden, wobei auf der einen Seite das mutterartige Teil eingeschlagen und auf der anderen Seite die Schraube eingeführt werden kann. Mittels eines entsprechend großen Schraubenkopfes und/oder der Anordnung einer Unterlegscheibe kann auch für die Schraube der entsprechend größere Durchmesser der Durchgangsbohrung überbrückt werden. Zudem ist gerade dadurch eine Verschiebemöglichkeit durch unterschiedliche Wärmedehnungen der Materialien vorhanden.

Gerade bei Einsatz einer elastischen Dichtscheibe erweist es sich als vorteilhaft, wenn die an der Unterlegscheibe angeordnete elastische Dichtscheibe einen entgegen der Unterlegscheibe axial auskragenden Ringabschnitt aufweist, dessen Außendurchmesser im wesentlichen dem Durchmesser der Durchgangsbohrung in der Platte und in der Unterkonstruktion entspricht. Damit wird die Möglichkeit geschaffen, daß die Unterlegscheibe gegenüber der Durchgangsbohrung in der Unterkonstruktion immer zentriert montiert wird. Gleichzeitig ist durch die metallische Unterlegscheibe auch die Schraube zentriert angeordnet, wobei die unterschiedlichen Wärmedehnungen der Materialien von Balkonplatte und Unterkonstruktion durch die Bewegungsmöglichkeit im Bereich der elastischen Dichtscheibe aufgefangen werden. Somit ist eine optimale, elastisch federnde und trotzdem feste Verbindung möglich, und durch unterschiedliche Wärmedehnungen auftretende Querkräfte werden durch die elastische Dichtscheibe aufgefangen.

Ausführungsbeispiele der Erfindung werden in der nachstehenden Beschreibung anhand der Zeichnung noch näher erläutert. Es zeigen:
- Fig. 1: einen Schnitt durch eine Balkonplatte und eine Unterkonstruktion, wobei ein erfindungsgemäßer Befestiger eingesetzt ist;
- Fig. 2: einen Schnitt durch ein mutterartiges Teil;
- Fig. 3: eine Ansicht des mutterartigen Teiles von der Seite eines rohrförmigen Abschnittes her.

Mit einem Befestiger der vorliegenden Art sollen Balkonplatten 1 an einer Unterkonstruktion 2 befestigt werden. Die Balkonplatten 1 bestehen aus irgendwelchen Materialien, die ermöglichen, daß die Balkonplatten dünn ausgeführt sind. In der Regel tragen Balkonplatten eine Oberflächenbeschichtung, um sie dadurch problemlos der Witterung aussetzen zu können. Die Unterkonstruktion 2 besteht normalerweise aus Metallprofilen, wobei im Balkonbereich eine Art Profilkonstruktion geschaffen wird, wie sie üblicherweise auch bei sonstigen Balkongeländem zum Einsatz kommt. Natürlich werden hier spezielle Metallprofile eingesetzt.

Die erfindungsgemäßen Maßnahmen lassen sich aber auch bei Fällen einsetzen, bei denen irgendwelche Platten an einer Unterkonstruktion befestigt werden sollen, wobei insbesondere von einer Seite her eine schwere Zugänglichkeit gegeben ist oder die Zugänglichkeit ausgeschaltet werden soll.

Der Befestiger besteht im wesentlichen aus einem mutterartigen Teil 3 und einer Schraube 4. Das mutterartige Teil weist einen Anschlagbund 5 und einen rohrförmigen Abschnitt 6 auf. Die Schraube 4 besteht aus einem Schraubenkopf 18 und einem Schaft 16, welcher einen Gewindeabschnitt 7 hat. Unterhalb des Schraubenkopfes 18 kann noch eine Unterlegscheibe 8 mit einer elastischen Dichtscheibe 9 eingesetzt werden. Der also aus Schraube 4 und mutterartigem Teil 3 und gegebenenfalls aus der Unterlegscheibe 8 bestehende Befestiger wird in eine die Balkonplatte 1 und die Unterkonstruktion 2 durchdringende Durchgangsbohrung 10 eingesetzt.

Der rohrförmige Abschnitt 6 des mutterartigen Teiles 3 ist an seinem Außenumfang mit Rippen 11, welche nach dem Einschlagen in die Bohrung 10 eine Verdrehsicherung bewirken, versehen. Zusätzlich wird auch eine Verliersicherung geschaffen, weil die mutterartigen Teile 3 vor der eigentlichen Montage der Balkonplatten 1 in diese eingeschlagen und beim Montagevorgang beim Auftreffen der Schraube 4 nicht axial aus der Bohrung 10 hinausgedrückt werden. Es ist also sowohl eine Verdrehsicherung als auch eine Verliersicherung vorhanden.

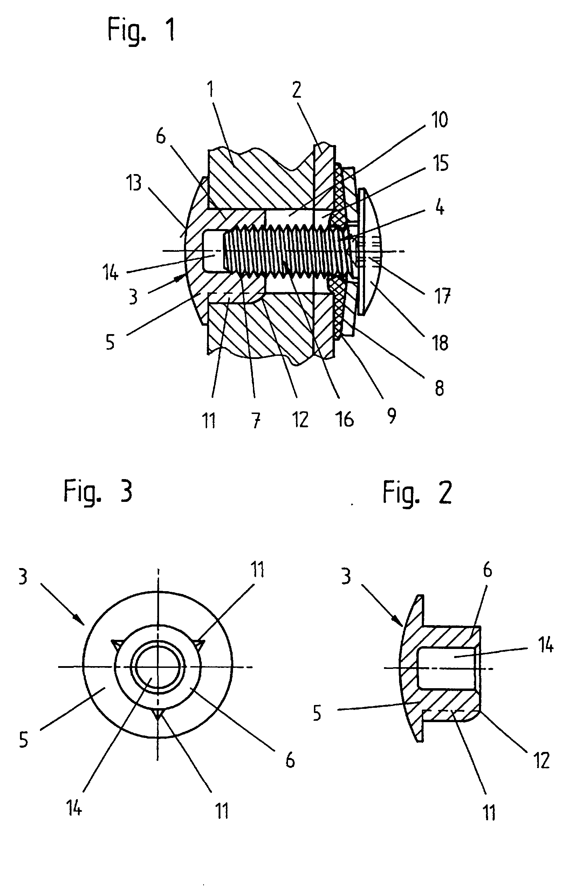

Zur Herstellung dieser Verdreh- und Verliersicherung sind an dem rohrförmigen Abschnitt 6 Rippen 11, welche zweckmäßigerweise achsparallel zum rohrförmigen Abschnitt 6 verlaufen, ausgebildet. Wie insbesondere der Fig. 3 entnommen werden kann, sind die Rippen 11 an ihren Außenbereichen schneidenartig ausgebildet. Zur Erhöhung der Verliersicherung oder zur axialen Sicherung wäre es zusätzlich möglich, die Rippen 11 bezogen auf deren Längserstreckung mit Unterbrechungen auszubilden, z.B. nach Art eines Sägezahnes verlaufend. Diese Sägezähne, welche schlußendlich die Rippen 11 bilden, könnten dann nach Art von Widerhaken gegen ein Hinausdrücken in axialer Richtung wirken.

Für das leichtere Einführen und Einschlagen des mutterartigen Teiles 3 werden die Rippen 11 an ihrem mit dem rohrförmigen Abschnitt 6 abschließenden Ende spitzwinklig oder bogenförmig verjüngt zum Außendurchmesser des rohrförmigen Abschnittes 6 hin auslaufend gefertigt. Bei der in der Zeichnung dargestellten Ausgestaltung ist ein bogenförmiger Übergang 12 vorgesehen.

Die dargestellte Ausführungsform zeigt drei am Umfang gleichmäßig verteilt angeordnete Rippen 11. Es ist notwendig, zumindest eine solche Rippe 11 vorzusehen, wobei aber auch eine Ausführung mit mehr als drei solcher Rippen denkbar ist. Es ist auch vorstellbar, die Rippen 11 nicht exakt achsparallel zum rohrförmigen Abschnitt 6 verlaufend anzuordnen, sondern diese beispielsweise schraubenlinienförmig mit entsprechend großer Steigung vorzusehen, so daß das mutterartige Teil beim Einschlagen zusätzlich zur Axialbewegung eine geringfügige Verdrehbewegung ausführt. In diesem Fall könnte die Verdrehrichtung beispielsweise so gewählt werden, daß der mutterartige Teil 3 beim nachträglichen Eindrehen der Schrauben - was noch näher erläutert wird - bestrebt ist, noch weiter in die Bohrung 10 einzudringen. Dann wäre auf das mutterartige Teil 3 eine Drehmomentbelastung gegeben, die sich in "Eindrehrichtung" des mutterartigen Teiles 3 auswirkt.

Es können also die verschiedensten Maßnahmen gesetzt werden, um das mutterartige Teil 3 mit seinem rohrförmigen Abschnitt 6 entsprechend verdreh- und verliersicher in der Bohrung 10 der Platte 1 zu halten. So ist es auch möglich, anstelle der Rippen 11 eine entsprechende Rändelung oder aber eine Art Gewinde vorzusehen. Wenn jedoch ein Gewinde mit relativ geringer Gewindesteigung vorgesehen wird, müssen an der Außenbegrenzung des Anschlagbundes 5 des mutterartigen Teiles 3 entsprechende Angriffselemente für ein Werkzeug vorgesehen werden, da das mutterartige Teil 3 dann nicht mehr eingeschlagen werden kann, sondern eingedreht werden muß.

Wenn an dem rohrförmigen Abschnitt 6 beispielsweise eine Rändelung oder an der Oberfläche eine entsprechende Aufrauhung vorhanden ist, ist es auch möglich, den rohrförmigen Abschnitt 6 an seinem freien Ende mit einer entsprechenden Anfasung zu versehen oder eine Verjüngung in anderer Weise auszubilden, um dadurch beim Einschlagen des mutterartigen Teiles ein gutes Eindringen des rohrförmigen Abschnittes 6 zu ermöglichen.

Das mutterartige Teil 3 ist im Bereich des Anschlagbundes 5 an seiner Außenoberfläche 13 bogenförmig gewölbt ausgeführt. Damit ist ein ästhetischer Abschluß vorhanden und außerdem gerade bei einer solchen Ausgestaltung die Gewähr gegeben, daß eine Betätigung, d.h. ein Verdrehen des mutterartigen Teiles, von dieser Außenseite her verhindert ist.

Die Schraube 4 ist bei der dargestellten Ausführung über die ganze Länge des Schaftes 16 mit einem Gewindeabschnitt 7 versehen. Es wäre aber auch denkbar, daß lediglich am freien Endbereich des Schaftes 16 ein entsprechender Gewindeabschnitt 7 vorhanden ist, und zwar in jenem Bereich, welcher in den rohrförmigen Abschnitt 6 des mutterartigen Teiles 3 eingreift. Der Gewindeabschnitt 7 der Schraube 4 ist selbstformend oder selbstschneidend ausgebildet, da die Schraube 4 beim Eindrehen in den rohrförmigen Abschnitt 6 auf eine gewindelose, mittige Bohrung 14 stößt und in dieser das Gewinde selbst formen oder schneiden muß. Gerade dadurch wird aber auch die Fertigung des mutterartigen Teiles 3 wesentlich vereinfacht, da in der Bohrung 14 nicht von vorneherein ein Innengewinde hergestellt werden muß. Eine besonders vorteilhafte Ausgestaltung beim Formen eines Gewindes wird durch die Möglichkeit geschaffen, die Schraube 4 zumindest im Bereich des Gewindeabschnittes 7 nach Art eines Gleichdicks, z.B. mit einem trilobularen Querschnitt auszubilden. Dadurch wird nicht nur eine optimale Gewindeherstellung bewerkstelligt, sondern gleichzeitig auch eine entsprechende Rückdrehsicherung erzielt.

Die Schraube 4 weist einen Schraubenkopf 18 auf, dessen Durchmesser wesentlich größer als der Durchmesser des Schaftes 16 und auch größer als der Außendurchmesser des rohrförmigen Abschnittes 6 des mutterartigen Teiles 3 ist. Es ist dadurch möglich, die Bohrung 10 sowohl in der Balkonplatte 1 als auch in der Unterkonstruktion 2 mit gleichem Durchmesser durchgehend auszuführen, wobei trotzdem eine ausreichende Auflage des Schraubenkopfes 18 an der Unterkonstruktion 2 gewährleistet ist. Unter dem Schraubenkopf 18 kann eine metallische Unterlegscheibe 8, deren Außendurchmesser größer als der Durchmesser des Schraubenkopfes 18 und deren Lochdurchmesser gleich oder größer als der Durchmesser des Schraubenschaftes 16 ist, eingesetzt werden. Bei einer solchen Maßnahme kann eventuell auch vorgesehen werden, daß der Durchmesser des Schraubenkopfes 18 kleiner ausgeführt ist, so daß die metallische Unterlegscheibe 8 den entsprechenden Durchmesserbereich überbrückt und eine sichere Abstützung der Befestigung im Hinblick auf die Unterkonstruktion 2 bewerkstelligt.

Der Schraubenkopf 18 ist vorteilhaft mit einem mittigen Innenangriff 17 zum Ansetzen eines Werkzeuges ausgestattet. Obwohl hier alle möglichen Varianten eines Innenangriffes vorgesehen werden können, wird aus Sicherheitsgründen vorgeschlagen, ganz spezielle Innenangriffe vorzusehen, welche mit üblichen, beispielsweise im Privathaushalt vorhandenen Werkzeugen nicht erfaßt werden können.

Die metallische Unterlegscheibe 8 kann an ihrer dem Schraubenkopf 18 abgewandten Unterseite eine elastische Dichtscheibe 9 aufweisen. Entweder durch den Anpreßdruck bei der Montage oder aber von vorneherein kann an dieser elastischen Dichtscheibe 9 ein entgegen der Unterlegscheibe 8 axial auskragender Ringabschnitt 15 vorgesehen werden, wobei der Außendurchmesser dieses Ringabschnittes 15 dem Durchmesser der Durchgangsbohrung 10 in der Balkonplatte 1 und in der Unterkonstruktion 2 entsprechen muß. Damit wird eine Art Zentrierung hergestellt, wodurch die Schraube 4 im wesentlichen zentrisch in der Bohrung 10 in der Unterkonstruktion 2 gehalten wird. Wenn nun durch entsprechende Wärmeeinwirkung unterschiedliche Ausdehnungen der Balkonplatte 1 und der Unterkonstruktion 2 erfolgen, können die dadurch entstehenden Querkräfte und Verschiebungen durch die elastische Dichtscheibe 9 aufgefangen werden.

Wie schon erwähnt, ist die Bohrung 10 als Durchgangsbohrung ausgebildet, welche an sich an den Außendurchmesser des rohrförmigen Abschnittes 6 des mutterartigen Teiles 3 angepaßt ist. Es wäre aber auch denkbar, die Bohrung im Bereich der Unterkonstruktion 2 geringfügig kleiner oder aber auch entsprechend größer auszugestalten. Die Bohrungen 10 in der Balkonplatte 1 müssen in Anpassung an das mutterartige Teil 3 so gestaltet werden, daß eine entsprechende Verdreh- und Verliersicherung gewährleistet ist. So wäre es auch denkbar, neben den eingreifenden Rippen 11 oder einer entsprechenden Rändelung durch eine knapp bemessene Durchmesserwahl bei der Bohrung 10 eine Art Paßsitz für den rohrförmigen Teil 6 herzustellen, um dadurch die Wirkung gegen ein Verdrehen oder eine axiale Verschiebung zu verstärken.

Es ist auch möglich, die Rippen 10 oder dergleichen mit geringem Abstand vom Ende des rohrförmigen Abschnittes 6 beginnen zu lassen. Dadurch kann der freie Endbereich vorerst nach Art eines Zentrierelementes in die Durchgangsbohrung eingeführt werden.

Durch vorstehend beschriebenen Maßnahmen wird auf jeden Fall die Möglichkeit geschaffen, daß das mutterartige Teil 3 und die Schraube 4 an den einander gegenüberliegenden Enden der jeweils eine Balkonplatte und die Unterkonstruktion durchdringenden Bohrung einführbar sind. Die Montage kann von der Innenseite eines Balkons aus erfolgen, nachdem die Balkonplatten 1 gegenüber der Unterkonstruktion 2 entsprechend ausgerichtet worden sind. Es sind von außen keinerlei Werkzeuge anzusetzen, und ein relativ langer Gewindeeingriff ist trotz entsprechend dünner Balkonplatten 1 möglich.

Zur Verstärkung der Verdrehsicherung wäre es zudem denkbar, an der Unterseite des Anschlagbundes 5 des mutterartigen Teiles 3 radiale Rippen oder Aufrauhungen oder eine Rändelung vorzusehen. Auch Dichtmittel könnten eingesetzt werden, z.B. eine elastische Dichtscheibe. Diesfalls wäre von außen her ebenfalls eine optimale Abdichtung gewährleistet und es würde mit Sicherheit vermieden, daß Feuchtigkeit in das Innere der Bohrung 10 eindringen kann.

Das mutterartige Teil 3 ist aus Metall gefertigt, wobei die vorteilhafte Ausgestaltung in einer Ausführung aus Aluminium besteht. Die Schraube 4 kann aus einem rostfreien Material, beispielsweise rostfreiem Stahl, hergestellt werden. Zusätzlich besteht die Möglichkeit, auf dem Gewindeabschnitt 7 eine Klebstoffbeschichtung vorzusehen, z.B. einen mikroverkapselten Klebstoff, der beim Eindrehen der Schraube, d.h. bei der Fertigung des Gewindes wirksam wird und so zu einer erhöhten Rückdrehsicherung beiträgt.

Bei Einsatz einer metallischen Unterlegscheibe 8 ist es zweckmäßig, wenn der Durchmesser des Loches in der Unterlegscheibe 8 zumindest etwas größer ist als der Durchmesser des Schaftes 16, da sich der Kopf 18 der Schraube 4 diesfalls bei entsprechenden Verschiebungen zwischen der Balkonplatte 1 und der Unterkonstruktion 2 gegenüber der Oberfläche der metallischen Unterlegscheibe 8 verschieben kann. Eine solche Variante ist insbesondere dann erforderlich, wenn keine elastische Dichtscheibe 9 eingesetzt wird.

## Patentansprüche

1. Befestiger zur Fixierung von Platten (1) an einer Unterkonstruktion (2), bestehend aus einem mutterartigen Teil (3) aus Metall und einer Schraube (4), wobei das mutterartige Teil (3) einen Anschlagbund (5), einen rohrförmigen Abschnitt (6) zum Eingriff eines Gewindeabschnittes (7) der Schraube (4) und eine Verdreh- und Verliersicherung aufweist, wobei das mutterartige Teil (3) und die Schraube (4) an den einander gegenüberliegenden Enden der jeweils eine Platte (1) und die Unterkonstruktion (2) durchdringenden Bohrung (10) einführbar sind, wobei der rohrförmige Abschnitt (6) des mutterartigen Teils (3) eine gewindelose, mittige Bohrung (14) aufweist, wobei die Schraube (4) einen beim Eindrehen in die mittige Bohrung (14) des rohrförmigen Abschnittes (6) des mutterartigen Teils (3) in diese ein Gewinde einformenden oder einschneidenden Gewindeabschnitt (7) hat, wobei zum Fixieren von relativ dünnen Balkonplatten an einer aus Metallprofilen gefertigten Unterkonstruktion das mutterartige Teil (3) zum Einschlagen in eine Bohrung (10) einer zu fixierenden Balkonplatte (1) ausgebildet ist und die Länge des mutterartigen Teils (3) so bemessen ist, daß sich das mutterartige Teil (3) nach dem Einschlagen nur in der Bohrung (10) der Balkonplatte erstreckt wobei an dem rohrförmigen Abschnitt (6) des mutterartigen Teils (3) an dessen Außenumfang Rippen (11) vorgesehen sind oder eine Rändelung od. dgl., die nach dem Einschlagen des mutterartigen Teils (3) in die Bohrung (10) der Balkonplatte (1) die Verdreh- und Verliersicherung und eine zusätzliche Axialsicherung bewirken, und wobei die Schraube (4) mit einem Gewindeabschnitt (7) nach Art eines Gleichdicks z.B. mit einem trilobularen Querschnitt ausgebildet ist.

2. Befestiger nach Anspruch 1, **dadurch gekennzeichnet, daß** die am Außenumfang des rohrförmigen Abschnittes (6) des mutterartigen Teiles (3) vorgesehenen Rippen (11) im wesentlichen achsparallel ausgerichtet sind.

3. Befestiger nach Anspruch 1 oder 2, **dadurch gekennzeichnet, daß** die Rippen (11) an ihren Außenbereichen schneidenartig ausgebildet sind.

4. Befestiger nach einem der Ansprüche 1 bis 3, **dadurch gekennzeichnet, daß** die Rippen (11) an ihrem mit dem rohrförmigen Abschnitt (6) abschließenden Ende spitzwinklig oder bogenförmig verjüngt zum Außendurchmesser des rohrförmigen Abschnittes (6) hin auslaufen.

5. Befestiger nach einem der Ansprüche 1 bis 4, **dadurch gekennzeichnet, daß** der rohrförmige Abschnitt (6) an seinem freien Ende mit einer Anfasung versehen oder in anderer Weise verjüngt ausgeführt ist.

6. Befestiger nach Anspruch 1, **dadurch gekennzeichnet, daß** der Anschlagbund (5) des mutterartigen Teiles (3) an seiner Außenoberfläche bogenförmig gewölbt ausgeführt ist.

7. Befestiger Anspruch 1, **dadurch gekennzeichnet, daß** die Schraube (4) einen Schraubenkopf (18) aufweist, dessen Durchmesser wesentlich größer als der Durchmesser des Schaftes (16) der Schraube (4) und größer als der Außendurchmesser des rohrförmigen Abschnittes (6) des mutterartigen Teiles (3) ist.

8. Befestiger nach einem der Ansprüche 1 bis 7, **dadurch gekennzeichnet, daß** unter dem Schraubenkopf (18) eine metallische Unterlegscheibe (8) eingesetzt ist, deren Außendurchmesser größer als der Durchmesser des Schraubenkopfes (18) ist und deren Lochdurchmesser gleich dem oder größer als der Durchmesser des Schraubenschaftes (16) ist.

9. Befestiger nach Anspruch 8, **dadurch gekennzeichnet, daß** die metallische Unterlegscheibe (8) an ihrer dem Schraubenkopf (18) abgewandten Unterseite eine elastische Dichtscheibe (9) aufweist.

10. Befestiger nach Anspruch 9, **dadurch gekennzeichnet, daß** dieser in eine die Balkonplatte (1) und die Unterkonstruktion (2) durchdringende Durchgangsbohrung (10), deren Durchmesser im wesentlichen dem Außendurchmesser des rohrförmigen Abschnittes (6) des mutterartigen Teiles (3) entspricht, einsetzbar ist.

11. Befestiger nach Anspruch 10, **dadurch gekennzeichnet, daß** die an der Unterlegscheibe (8) angeordnete elastische Dichtscheibe (9) einen entgegen der Unterlegscheibe (8) axial auskragenden Ringabschnitt (15) aufweist, dessen Außendurchmesser im wesentlichen dem Durchmesser der Durchgangsbohrung (10) in der Balkonplatte (1) und in der Unterkonstruktion (2) entspricht.

12. Befestiger nach einem der Ansprüche 1 bis 11, **dadurch gekennzeichnet, daß** der Schraubenkopf (18) mit einem mittigen Innenangriff (17) zum Ansetzen eines Werkzeuges ausgestattet ist.

## Claims

1. A fastener for securing panels (1) to a substructure (2), comprising a metal nut-like part (3) and a screw (4), wherein the nut-like part (3) has an abutment flange (5), a tubular portion (6) for engagement of a threaded portion (7) of the screw (4) and an antirotational and captive feature, wherein the nut-like part (3) and the screw (4) can be inserted at the opposite ends of a bore (10) passing respectively through a panel (1) and the substructure (2), wherein the tubular portion (6) of the nut-like part (3) has a threadless central bore (14), wherein the screw (4) has a threaded portion (7) which upon being screwed into the central bore (14) of the tubular portion (6) of the nut-like part (3) forms or taps a screw-thread in the latter, wherein to secure relatively thin balcony panels to a substructure produced from metal sections the nut-like part (3) is designed to be driven into a bore (10) in a balcony panel (1) to be secured, and the length of the nut-like part (3) is of such dimensions that the nut-like part (3), after being driven in, extends only into the bore (10) of the balcony panel, wherein ribs (11), or a knurling or the like, are provided on the outer periphery of the tubular portion (6) of the nut-like part (3), which after the driving-in of the nut-like part (3) into the bore (10) of the balcony panel (1) provide the antirotational and captive feature and effect additional axial location, and wherein the screw (4) is formed with a threaded portion (7) of constant-diameter type, for example of trilobular cross-section.

2. A fastener according to Claim 1, **characterised in that** the ribs (11) provided on the outer periphery of the tubular portion (6) of the nut-like part (3) are aligned substantially axially parallel.

3. A fastener according to Claim 1 or 2, **characterised in that** on their outer zones the ribs (11) are of cutting edge form.

4. A fastener according to any one of Claims 1 to 3, **characterised in that** at their end terminating at the tubular portion (6) the ribs (11) extend at an acute angle or arcuately tapering towards the outer diameter of the tubular portion (6).

5. A fastener according to any one of Claims 1 to 4, **characterised in that** at its free end the tubular portion (6) is provided with a chamfer or is of otherwise tapered form.

6. A fastener according to Claim 1, **characterised in that** on its outer surface the abutment flange (5) of the nut-like part (3) is of arcuately curved form.

7. A fastener according to Claim 1, **characterised in that** the screw (4) has a screw head (18) whose diameter is substantially larger than the diameter of the shank (16) of the screw (4) and is larger than the outer diameter of the tubular portion (6) of the nut-like part (3).

8. A fastener according to any one of Claims 1 to 7, **characterised in that** a metal washer (8) is inserted under the screw head (18), the outer diameter of which washer is larger than the diameter of the screw head (18) and the hole diameter of which is equal to or larger than the diameter of the screw shank (16).

9. A fastener according to Claim 8, **characterised in that** on its underside remote from the screw head (18) the metal washer (8) has an elastic sealing washer (9).

10. A fastener according to Claim 9, **characterised in that** it can be inserted into a through-bore (10) passing through the balcony panel (1) and the substructure (2), the diameter of which bore corresponds substantially to the outer diameter of the tubular portion (6) of the nut-like part (3).

11. A fastener according to Claim 10, **characterised in that** the elastic sealing washer (9) arranged on the washer (8) has an annular portion (15) which projects axially counter to the washer (8) and whose outer diameter corresponds substantially to the diameter of the through-bore (10) in the balcony panel (1) and in the substructure (2).

12. A fastener according to any one of Claims 1 to 11, **characterised in that** the screw head (18) is provided with a central internal engagement portion (17) for the application of a tool.

## Revendications

1. Attache pour fixer des plaques (1) sur une infrastructure (2), composée d'une partie métallique en forme d'écrou (3) et d'une vis (4), dans laquelle :
- la partie en forme d'écrou (3 ) présente un collet de butée (5), une section tubulaire (6) pour accueillir une section filetée (7) de la vis (4) et une sécurité antirotation et antiperte,
- la partie en forme d'écrou (3) et la vis (4) peuvent, par leurs extrémités opposées, être introduites toutes deux dans un perçage (10) traversant à la fois une plaque (1) et l'infrastructure (2),
- la section tubulaire (6) de la partie en forme d'écrou (3) présente un alésage central (14) non fileté et la vis (4) présente une partie filetée (7) qui par rotation dans cet alésage central (14) forme dans celui-ci, par taraudage, un filetage,
- pour fixer des plaques de balcon (1) relativement minces sur une infrastructure faite de profilés métalliques, la partie en forme d'écrou (3) est conçue pour être enfoncée dans un perçage (10) d'une plaque à fixer (1) et sa longueur est dimensionnée pour, après enfoncement, ne pas dépasser le perçage (10),
- sur la périphérie de la partie en forme d'écrou (3), il est prévu des nervures (11) ou un moletage ou similaire apportant, après enfoncement de la partie en forme d'écrou (3) dans le perçage (10) de la plaque (1), une sécurité antirotation ainsi qu'une sécurité axiale,
- la section filetée (7) de la vis (4) est du genre orbiforme, elle comporte par exemple trois lobes.

2. Attache selon la revendication 1,
**caractérisée en ce que**
les nervures (11) prévues sur la périphérie de la section tubulaire (6) de la partie en forme d'écrou (3) sont essentiellement parallèles à l'axe.

3. Attache selon l'une des revendications 1 à 2,
**caractérisée en ce que**
les nervures (11) présentent vers l'extérieur un bord tranchant.

4. Attache selon l'une quelconque des revendications 1 à 3,
**caractérisée en ce que**
les nervures (11), à leurs extrémités se terminant avec la section tubulaire (6), se réduisent selon une pente ou un arc rejoignant le diamètre externe de cette section tubulaire (6).

5. Attache selon l'une quelconque des revendications 1 à 4,
**caractérisée en ce que**
la section tubulaire (6) présente, à son extrémité libre, un biseau ou se réduit d'une autre manière.

6. Attache selon la revendication 1,
**caractérisée en ce que**
le collet de butée (5) de la partie en forme d'écrou (3) a sa surface externe bombée en arc de cercle.

7. Attache selon la revendication 1,
**caractérisée en ce que**
la vis (4) a une tête (18) dont le diamètre est nettement plus grand que celui de la tige (16) de la vis (4) et que le diamètre externe de la section tubulaire (6) de la partie en forme d'écrou (3).

8. Attache selon l'une quelconque des revendications 1 à 7,
**caractérisée en ce que**
sous la tête de vis (18) est placée une rondelle (8) dont le diamètre externe est supérieur à celui de la tête de vis (18) et dont le perçage central a un diamètre égal ou supérieur au diamètre de la tige de vis (16).

9. Attache selon la revendication 8,
**caractérisée en ce que**
la rondelle métallique (8) porte, sur sa face éloignée de la tête de vis (18) une rondelle élastique d'étanchéité (9).

10. Attache selon la revendication 9,
**caractérisée en ce qu'**
elle peut être introduite dans un perçage de passage (10) traversant la plaque de balcon (1) et l'infrastructure (2), dont le diamètre correspond essentiellement au diamètre externe de la section tubulaire (6) de la partie en forme d'écrou (3).

11. Attache selon la revendication 10,
**caractérisée en ce que**
la rondelle élastique d'étanchéité (9) montée sur la rondelle (8) présente une partie annulaire (15) faisant saillie axialement du côté opposé à la rondelle (8) et dont le diamètre externe est sensiblement égal au diamètre de l'alésage de passage (10) dans la plaque de balcon (1) et dans l'infrastructure (2).

12. Attache selon l'une quelconque des revendications 1 à 11,
**caractérisée en ce que**
la tête de vis (18) présente une empreinte centrale (17) permettant la prise d'un outil.
